# FASCICULE DE BREVET EUROPEEN

(11) **EP 1 627 512 B1**
(45) Date de publication et mention de la délivrance du brevet: **23.01.2013**
(21) Numéro de dépôt: 04742692.9
(22) Date de dépôt: 10.05.2004
(51) Int. Cl.: H04L 29/06, H04L 29/08

(54) **PROCEDE ET SYSTEME POUR LUTTER CONTRE LA DIFFUSION ILLEGALE D'OEUVRES PROTEGEES DANS UN RESEAU DE TRANSMISSION DE DONNEES NUMERIQUES**
VERFAHREN UND SYSTEM ZUR REGELUNG DER ILLEGALEN VERBREITUNG GESCHÜTZTER WERKE IN EINEM DIGITALEN DATENÜBERTRAGUNGSNETZ
METHOD AND SYSTEM FOR CONTROLLING THE ILLEGAL CIRCULATION OF PROTECTED WORKS IN A DIGITAL DATA TRANSMISSION NETWORK

(30) Priorité: 27.05.2003 FR 0306441
(43) Date de publication de la demande: 22.02.2006
(73) Titulaire: Co-Peer-Right Agency, 75003 Paris (FR)
(72) Inventeur: MICHENAUD, Stéphane, 92400 Courbevoie (FR); PETIT, Eric, F-91580 Etrechy (FR); ROYER, Jean-Hugues, 75020 Paris (FR)
(74) Mandataire: Marchand, André
(86) Numéro de dépôt international: PCT/FR2004/001136
(87) Numéro de publication internationale: WO 2004/107704

(56) Documents cités:
- US-A1- 2002 082 999
- US-A1- 2003 195 852
- FINDELI M: "P2P (Peer-to-Peer Networking)" UNIVERSITÄT MÜNCHEN - LEHRSTUHL FÜR KOMMUNIKATIONSNETZE, 1 July 2001 (2001-07-01), XP002241326
- "Overpeer spreads fake files though P2P networks" INTERNET CITATION, 9 July 2002 (2002-07-09), XP002327498

## Description

La présente invention concerne la diffusion de fichiers numériques par l'intermédiaire d'un réseau de transmission de données.

Elle s'applique notamment, mais non exclusivement, aux réseaux appelés poste à poste ("peer-to-peer" ou P2P) mis en oeuvre dans le réseau Internet et permettant à deux terminaux connectés en réseau poste à poste de s'échanger des fichiers, sans passer par un serveur central qui redistribue les données. Dans cette architecture, chaque terminal est configuré de manière à jouer le rôle à la fois de serveur et/ou de client. De cette manière, chaque terminal peut mettre à disposition d'un nombre illimité d'autres terminaux, des fichiers stockés dans sa mémoire (disque dur), sans recourir à un serveur central.

Certains réseaux poste à poste dits "centralisés" nécessitent la mise en oeuvre d'un serveur central gérant une base de données mémorisant pour chaque utilisateur du réseau un identifiant de l'utilisateur, associé à une liste de fichiers mis à la disposition des autres utilisateurs du réseau. Il existe également des réseaux poste à poste dits "décentralisés" dans lesquels la base de données mémorisant les informations relatives aux utilisateurs du réseau est répartie sur certains terminaux d'utilisateurs qui acceptent d'assurer cette fonction de base de données.

Ce type de réseau connaît actuellement un grand succès, en raison du fait que les utilisateurs peuvent par leur intermédiaire où qu'ils soient dans le monde du moment qu'ils sont connectés à un tel réseau, se procurer gratuitement des fichiers contenant notamment des oeuvres musicales, vidéo, et logicielles et des images, qui sont normalement protégées par des droits d'auteur. Il s'avère que cette diffusion illégale d'oeuvres protégées représente pour les éditeurs un manque à gagner considérable et en très forte augmentation chaque année.

Pour lutter contre un tel piratage, on a déjà envisagé comme dans le document US 2002/0082999, de diffuser un grand nombre de fichiers corrompus contenant des données erronées ou ne correspondant pas au nom ou au descriptif du fichier. En effet, les listes de fichiers diffusés contiennent des informations permettant d'identifier chacun de ces fichiers, telles que le nom du fichier, sa taille, son taux de compression, le débit de connexion de l'utilisateur diffusant le fichier, et dans le cas de fichiers contenant des données audionumériques, une fréquence d'échantillonnage et une durée d'écoute. Or ces informations ne sont pas suffisantes pour déterminer si un fichier ainsi proposé au téléchargement est correct et peut être rapidement téléchargé. Dans le cas particulier d'un fichier contenant une oeuvre musicale, il est impossible de déterminer a priori, si ce fichier contient effectivement l'oeuvre musicale indiquée et si celle-ci peut être restituée avec une bonne qualité d'écoute. Un tel téléchargement n'est donc pas très fiable.

Sachant qu'un fichier contenant une oeuvre musicale de plusieurs minutes présente une taille de plusieurs méga octets, et donc que le téléchargement d'un tel fichier peut durer plusieurs dizaines de minutes, voire plusieurs heures ou plusieurs jours, même en disposant d'un débit de transmission élevé, les utilisateurs sont dissuadés de télécharger ainsi des fichiers, à la suite de quelques téléchargements de fichiers corrompus. Cela est d'autant plus vrai dans le cas de fichiers vidéo ou de logiciels, qui ont une taille souvent plus importante que celle des fichiers audio.

Pour pouvoir repérer les fichiers corrompus, il n'est pas possible de télécharger au préalable les fichiers proposés par les utilisateurs sur un serveur central pour les examiner avant de les proposer au téléchargement, car en détenant ainsi une grande quantité de copies illégales, le propriétaire du serveur se mettrait dans l'illégalité. Il n'est pas non plus possible de fournir des informations sur l'identité ou l'origine des utilisateurs proposant le téléchargement de fichiers, car si ceux-ci étaient ainsi clairement identifiés, ils pourraient facilement faire l'objet de poursuites en justice pour reproduction d'oeuvres protégées par droit d'auteur.

Cette solution s'avère toutefois difficile à mettre en oeuvre dans les réseaux poste à poste. En effet, il existe aujourd'hui de nombreux réseaux poste à poste indépendants les uns des autres, basés sur des protocoles différents tels que OpenNap, Gnutella, FastTrack, et eDonkey. Les fichiers corromus doivent donc être diffusés sur chacun de ces réseaux. Le code source de certains de ces protocoles n'est pas accessible. Il n'est donc pas aisé de simuler un utilisateur pour diffuser des fichiers corrompus.

En outre, chaque utilisateur d'un réseau poste à poste doit posséder un identifiant dans le réseau pour pouvoir notamment mettre en partage des fichiers. Les identifiants utilisés pour mettre en partage des fichiers corrompus peuvent donc être repérés.

Par ailleurs, les listes de fichiers diffusés contiennent toutes une signature associée à chaque fichier, par exemple de type SHA ou MD5, une telle signature étant calculée sur le contenu du fichier de manière à ce que si un seul octet du fichier est changé, la signature du fichier soit également modifiée. La signature des fichiers peut donc également être utilisée pour repérer les fichiers corrompus.

La présente invention a pour but de surmonter ces obstacles. Cet objectif est atteint par la prévision d'un procédé de protection de fichiers diffusés illégalement dans des réseaux poste à poste mis en oeuvre, conformément à des protocoles de réseau poste à poste respectifs, par des terminaux d'utilisateur connectés à un réseau de transmission de données et qui sont configurés pour fonctionner à la fois comme client et/ou comme serveur de fichiers.

Ce procédé est décrit par les caractéristiques de la revendication independante 1.

Selon une particularité de l'invention, ce procédé comprend en outre des étapes consistant à :
- rechercher par au moins un terminal d'utilisateur simulé par une plate-forme de protection, des fichiers mis en partage par des terminaux d'utilisateurs dans des réseaux poste à poste et reproduisant au moins partiellement le contenu de fichiers à protéger,
- si un fichier mis en partage est trouvé, obtenir des caractéristiques du fichier trouvé, générer une version corrompue du fichier trouvé à partir du fichier à protéger correspondant et ayant les caractéristiques du fichier trouvé, et mettre en partage la version corrompue par les terminaux d'utilisateur simulés.

Avantageusement, si des groupements sont définis dans le réseau poste à poste où le fichier mis en partage est trouvé, le fichier est téléchargé par un terminal d'utilisateur simulé, altéré et mis en partage au fur et à mesure de son téléchargement.

De préférence, durant la recherche de fichiers mis en partage par des terminaux d'utilisateurs dans des réseaux poste à poste, un serveur de réseau poste à poste détecté non accessible est mis sous surveillance par le terminal d'utilisateur simulé et dès qu'il est à nouveau détecté accessible, la recherche de fichiers mis en partage est lancée sur le serveur de réseau poste à poste accessible, de manière à rendre la recherche plus exhaustive.

Selon une autre particularité de l'invention, ce procédé comprend en outre une étape de téléchargement par un terminal d'utilisateur simulé d'un fichier mis en partage trouvé dans un terminal d'utilisateur, afin de limiter l'accès au fichier mis en partage par d'autres terminaux d'utilisateurs.

Avantageusement, le téléchargement par un terminal d'utilisateur simulé d'un fichier mis en partage trouvé est effectué à une vitesse faible, une vitesse élevée étant attribuée au téléchargement par un terminal d'utilisateur d'un fichier corrompu mis en partage par un terminal utilisateur simulé par une plate-forme de protection.

Selon une autre particularité de l'invention, les terminaux utilisateurs simulés sont simulés conformément à un profil d'utilisateur définissant un lieu géographique de connexion au réseau et un planning de connexion journalier ou hebdomadaire.

De préférence, les terminaux utilisateurs simulés sont simulés à l'aide d'un nom d'utilisateur généré aléatoirement ou choisi de manière ciblée.

Selon une autre particularité de l'invention, une adresse IP du réseau est attribuée à chaque terminal d'utilisateur simulé, cette adresse étant changée périodiquement.

Selon encore une autre particularité de l'invention, ce procédé comprend la réception et le traitement par chaque plate-forme de protection d'ordres d'activation de terminaux d'utilisateurs simulés, chaque ordre d'activation de terminal d'utilisateur simulé spécifiant un réseau point à point à accéder, un identifiant d'utilisateur à utiliser pour accéder au réseau point à point, et un fournisseur d'accès à utiliser pour se connecter au réseau.

L'invention concerne également un système de protection de fichiers diffusés illégalement dans des réseaux poste à poste mis en oeuvre, conformément à des protocoles de réseau poste à poste respectifs, par des terminaux d'utilisateur connectés à un réseau de transmission de données et qui sont configurés pour fonctionner à la fois comme client et/ou comme serveur de fichiers.

Ce système est décrit par les caractéristiques de la revendication indépendante 10.

Selon une particularité de l'invention, chaque plate-forme de protection comprend des moyens pour effectuer des recherches, par l'intermédiaire de terminaux d'utilisateurs simulés, de fichiers mis en partage dans les réseaux poste à poste et reproduisant au moins partiellement le contenu de fichiers à protéger.

Selon une encore autre particularité de l'invention, chaque plate-forme de protection comprend des moyens pour télécharger par l'intermédiaire de terminaux d'utilisateurs simulés, un morceau de fichier mis en partage par un groupement de terminaux dans un réseau poste à poste et reproduisant au moins partiellement le contenu de fichiers à protéger, des moyens pour altérer le morceau de fichier télécharger et pour mettre en partage le morceau de fichier altéré, l'altération du morceau de fichier étant effectuée de manière à ce qu'une signature du fichier ne soit pas modifiée.

Selon encore une autre particularité de l'invention, chaque plate-forme de protection comprend des moyens pour télécharger par l'intermédiaire d'un terminal d'utilisateur simulé un fichier mis en partage trouvé dans un terminal d'utilisateur et reproduisant au moins partiellement le contenu de fichiers à protéger, afin de limiter l'accès au fichier mis en partage par d'autres terminaux d'utilisateurs.

Selon encore une autre particularité de l'invention, chaque plate-forme de protection comprend des moyens pour télécharger à faible vitesse par l'intermédiaire d'un terminal d'utilisateur simulé, un fichier mis en partage trouvé, et des moyens pour télécharger à vitesse élevée vers un terminal d'utilisateur de réseau poste à poste, un fichier corrompu mis en partage par l'intermédiaire d'un terminal utilisateur simulé.

Selon encore une autre particularité de l'invention, ce système comprend une base de données centrale accessible par l'intermédiaire du réseau aux plates-formes de protection et dans laquelle sont stockées :
- des informations relatives aux terminaux d'utilisateurs simulés par les plates-formes de protection,
- des informations relatives à des fichiers mis en partage par des terminaux d'utilisateurs de réseaux poste à poste et reproduisant au moins partiellement le contenu de fichiers à protéger, et
- des informations relatives aux fichiers à protéger et aux fichiers mis en partage par les plates-formes.

Selon encore une autre particularité de l'invention, ce système comprend un serveur de clonage connecté au réseau et conçu pour générer des versions corrompues des fichiers à protéger.

Selon encore une autre particularité de l'invention, chaque plate-forme de protection comprend des groupes de serveurs connectés au réseau par l'intermédiaire de plusieurs fournisseurs d'accès.

Selon encore une autre particularité de l'invention, chaque plate-forme de protection comprend un module d'interface d'accès à chacun des réseaux poste à poste dans lesquels les fichiers à protéger doivent être protégés.

Un mode de réalisation préféré de l'invention sera décrit ci-après, à titre d'exemple non limitatif, avec référence aux dessins annexés dans lesquels :
La figure 1 représente schématiquement un système selon l'invention, pour empêcher la diffusion illégale de fichiers ;
La figure 2 illustre schématiquement le fonctionnement général du système représenté sur la figure 1 ;
La figure 3 illustre sous la forme d'un organigramme le fonctionnement d'une partie administration du système représenté sur la figure 1 ;
La figure 4 illustre sous la forme d'un organigramme le fonctionnement d'un processus de recherche exécuté par le système représenté sur la figure 1 ;
La figure 5 illustre sous la forme d'un organigramme le fonctionnement d'un processus de déploiement de fichiers corrompus exécuté par le système représenté sur la figure 1 ;
La figure 6 illustre sous la forme d'un organigramme le fonctionnement d'un processus de recopie et de corruption de fichiers, exécuté par le système représenté sur la figure 1 ;
La figure 7 montre en détail un module d'interface avec un réseau poste à poste, mis en oeuvre par le système représenté sur la figure 1;
Les figures 8 et 9 représentent schématiquement l'architecture matérielle de plates-formes de protection respectivement automatiques et manuelles mises en oeuvre par le système représenté sur la figure 1.

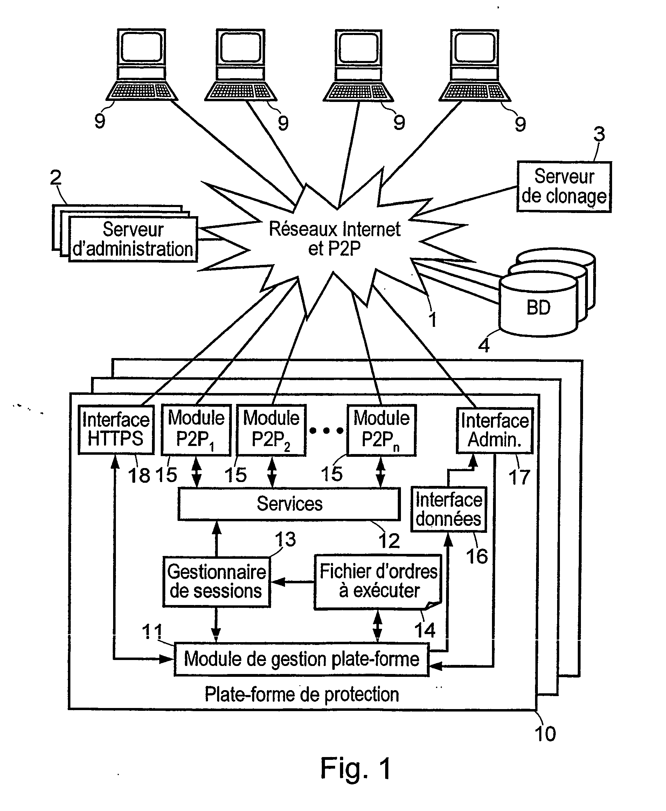

La figure 1 représente un système permettant d'empêcher la diffusion illégale de fichiers dans les réseaux dits "poste à poste" (P2P). Dans un réseau P2P, des utilisateurs disposant de terminaux 9 connectés à un réseau de transmission de données 1 tel que le réseau Internet, peuvent mettre à la disposition d'autres utilisateurs des fichiers stockés dans une zone mémoire d'échange de leur terminal. A cet effet, ils doivent installer et exécuter sur leur terminal un logiciel spécifique de partage et de téléchargement de fichiers, mettant en oeuvre un protocole de réseau P2P permettant notamment de configurer le terminal pour qu'il fonctionne à la fois comme client et comme serveur de fichiers vis-à-vis du réseau 1, pour les fichiers qui sont stockés dans une zone mémoire du terminal affectée à la mise en partage de fichier. Les différents terminaux d'utilisateurs 9 connectés au réseau 1 et exécutant un tel logiciel mettant en oeuvre le même protocole constituent un réseau P2P.

Pour empêcher que des fichiers ne soient diffusés illégalement sur de tels réseaux P2P, le système selon l'invention comprend une pluralité de plates-formes de protection 10 connectées en différents points du réseau, des serveurs d'administration 2 conçu pour piloter à distance les plates-formes de protection 10, un ensemble 4 de base de données et de serveur de base de données accessible par le réseau 1 et rassemblant toutes les données nécessaires au fonctionnement et à l'exploitation du système, et un serveur de clonage 3 également connecté au réseau 1 et permettant de générer des versions corrompues de fichiers à protéger ou dont la mise en partage doit être empêchée.

La base de données 4 est avantageusement dupliquée sur plusieurs serveurs, chaque réplique étant synchronisée avec une autre réplique de manière à garantir à tout instant un accès rapide et sûr aux données, et à éviter toute perte d'informations.

Chaque plate-forme de protection 10 comprend :
- un module 11 de gestion de la plate-forme, communiquant avec le réseau 1 par l'intermédiaire d'un module d'interface 17 mettant par exemple en oeuvre le protocole SOAP (Simple Object Access Protocol), pour recevoir des ordres de serveurs d'administration 2, ces ordres étant par exemple spécifiés dans des fichiers d'ordres 14 ;
- un module de gestion de sessions 13 conçu pour lancer et arrêter des sessions simulant des utilisateurs du réseau, et attribuer aux sessions des tâches spécifiques, conformément aux ordres définis dans le fichier d'ordres 14;

- un module de services 12 regroupant notamment un service de recherche de fichiers, un service de diffusion de fichier, et un service de téléchargement de fichiers, ces services étant activés par les sessions ;
- des modules de simulation 15 pour simuler respectivement chaque protocole P2P et rassemblant chacun des services élémentaires qui sont appelés par les services de plus haut niveau du module 12 ;
- un module d'interface 16 d'accès aux données de la base de données 4, et permettant au module de gestion 11 de mettre à jour la base de données par l'intermédiaire du module d'interface 17, avec les informations fournies par le module de gestion de sessions 13 ; et
- un module 18 d'interface HTTPS (Hypertext Transfer Protocol over SSL - Secure Sockets Layer) permettant à la plate-forme d'être pilotée manuellement via une liaison sécurisée à partir d'un terminal d'administration connecté au réseau 1.

L'administration d'une plate-forme est donc effectuée par l'intermédiaire d'un réseau exclusivement réservé à cet effet.

Les ordres spécifiés dans le fichier d'ordres 14 sont avantageusement écrits en langage XML (eXtensible Markup Language).

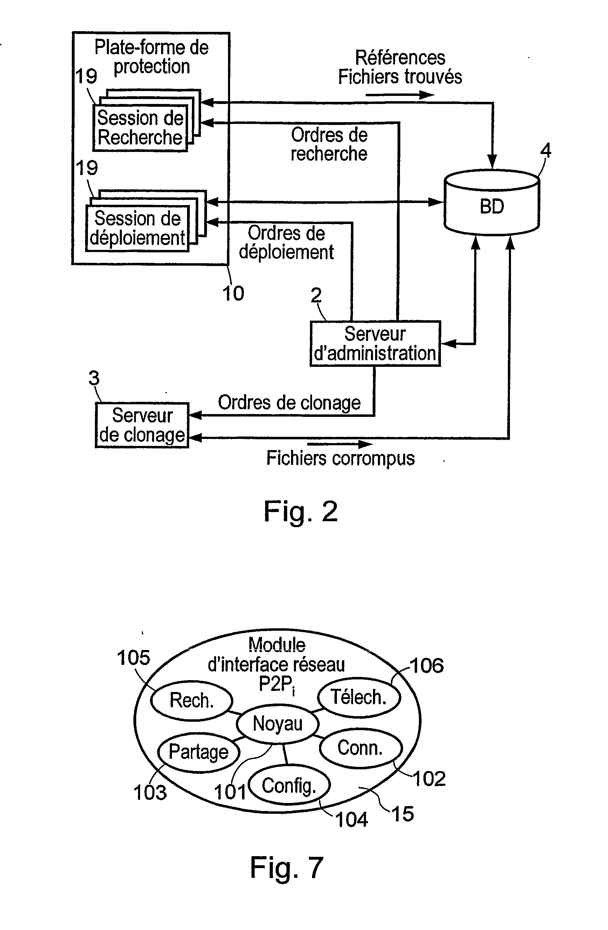

Sur la figure 2, le système selon l'invention fonctionne de la manière suivante. Un serveur d'administration 2 définit à partir des informations figurant dans la base de données 4, des ordres de recherche, de diffusion ou de déploiement, de téléchargement et de clonage, c'est-à-dire de duplication avec corruption, de fichiers à protéger, et transmet ces ordres à des plates-formes de protection 10 et au serveur de clonage 3. Les ordres de recherche et de déploiement sont définis dans des fichiers d'ordres 14 qui sont envoyés respectivement aux plates-formes, soit par l'intermédiaire de l'interface 17, soit par l'intermédiaire de l'interface 18. A la réception d'un tel fichier d'ordres, la plate-forme 10 qui le reçoit, active une ou plusieurs sessions de recherche 18 et/ou de déploiement 19 en fonction des ordres spécifiés dans le fichier d'ordres 14 reçu.

Les sessions de recherche permettent d'obtenir des références de fichiers qui sont diffusés par des utilisateurs d'un réseau P2P, ces références de fichiers étant transmises par le module de gestion 11 au serveur de base de données 4 pour les mémoriser dans la base de données. De même, les informations relatives aux déploiements qui sont exécutés par les sessions de déploiement sont transmises par le module de gestion 11 au serveur de base de données 4.

Les ordres de clonage contiennent les références des fichiers originaux à dupliquer et des caractéristiques de fichiers (taille, éventuellement signature, ...) à obtenir. A la réception d'un tel ordre, le serveur de clonage 3 accède à la base de données 4 pour obtenir le fichier original (contenant la bande originale) à dupliquer et génère un fichier corrompu en tenant compte des caractéristiques de fichier à obtenir, le fichier corrompu étant ensuite transmis à la base de données 4 pour y être stocké.

Bien entendu plusieurs méthodes de corruption peuvent être employées, notamment selon la nature du fichier. Ainsi par exemple, s'il s'agit d'un fichier contenant une oeuvre musicale ou vidéo, la méthode de corruption employée peut laisser intactes les premières et/ou dernières minutes de l'enregistrement, et modifier le reste du fichier de manière à le rendre inintelligible. S'il s'agit d'un fichier exécutable (logiciel), la méthode de duplication employée peut consister à modifier quelques octets du fichier original de manière à le rendre inexécutable.

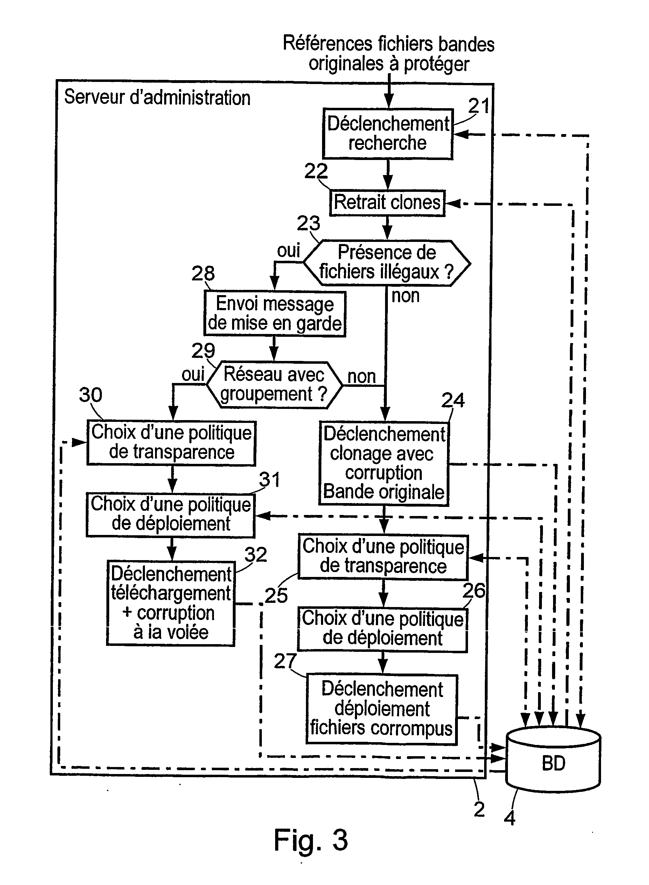

Pour générer les ordres qui sont appliqués aux plates-formes 10 et au serveur de clonage 3, chaque serveur d'administration 2 fonctionne dans un mode automatique de la manière représentée sur la figure 3.

Le serveur 2 consulte en permanence la base de données 4 pour détecter la présence de nouveaux fichiers de bandes originales à protéger. Pour chaque fichier trouvé, le serveur d'administration exécute une étape 21 de lancement de sessions de recherche sur différentes plates-formes 10 en fonction d'une politique de recherche. Cette étape consiste à envoyer des ordres de recherche aux différentes plates-formes définies par la politique de recherche.
Ces recherches sont avantageusement lancées plusieurs fois par jour à des fréquences aléatoires, en vue de détecter précisément et rapidement la mise en partage sur un réseau P2P de nouveaux fichiers diffusés illégalement et correspondant à des fichiers à protéger.

A l'étape suivante 22, le serveur 2 consulte la base de données 4 afin de récupérer les listes de résultats de recherches émises par les plates-formes 10, ces listes regroupant les références et caractéristiques de chaque fichier trouvé (nom du fichier, titre du fichier, auteur, taille du fichier, format, signature du fichier, nom de l'utilisateur qui le diffuse, réseau P2P de diffusion du fichier, ...). Les noms d'utilisateurs figurant dans les listes de recherches émises par les plate-formes 10 sont constitués par tout identifiant permettant d'identifier de manière unique un utilisateur, comme par exemple son adresse IP. Cette information peut être obtenue à l'aide d'un outil d'observation de flux TCP/IP entrants et sortants au niveau des plates-formes 10.
Le serveur 2 analyse ensuite ces listes de résultats de recherche, cette analyse visant à extraire de ces listes, les nouveaux fichiers trouvés en y retirant les fichiers corrompus diffusés par les plates-formes 10. S'il reste dans ces listes des fichiers à l'étape suivante 23, le serveur déclenche l'émission d'un message de mise en garde vers chaque utilisateur qui diffuse un fichier illégal pour l'informer sur les lois en vigueur dans son pays concernant la diffusion illégale de fichiers, et pour lui demander de retirer ce fichier de la zone mémoire de partage de son terminal.

Si malgré les messages de mise en garde qui lui ont été transmis, un utilisateur n'a pas retiré un fichier mis illégalement en partage, cette mise en partage peut être constatée par un huissier de justice à des fins de poursuites judiciaires, à la demande des ayants droits du fichier mis illégalement en partage.

Certains réseaux P2P comme Kazaa, WinMx ou eDonkey forment automatiquement des groupements d'utilisateurs possédant dans leur zone mémoire de partage le même fichier (ayant les mêmes caractéristiques) de manière à permettre le téléchargement d'un fichier par morceaux, chaque utilisateur du groupement fournissant un morceau du fichier. Lorsque tous les morceaux du fichier sont téléchargés par un utilisateur du réseau, le logiciel de réseau P2P installé sur le terminal de l'utilisateur regroupe les morceaux pour reconstituer le fichier. En outre, lorsqu'un morceau de fichier est téléchargé par un utilisateur, ce morceau est placé immédiatement en partage et l'utilisateur est intégré dans le groupement. Cette disposition permet d'améliorer l'accès aux fichiers partagés et d'augmenter considérablement la vitesse de téléchargement, mais impose un fonctionnement différent au système selon l'invention.

Comme chaque morceau de fichier téléchargé est placé automatiquement dans la zone de partage du terminal pendant son téléchargement, l'invention prévoit d'effectuer des téléchargements de fichiers pour pouvoir pénétrer dans les groupements d'utilisateurs, et de corrompre à la volée les morceaux téléchargés, c'est-à-dire au fur et à mesure de leur téléchargement. De cette manière, les autres utilisateurs qui téléchargent le fichier obtiendront un fichier ayant au moins une partie corrompue.

Lorsqu'à l'étape 23 le serveur d'administration 2 détecte que des fichiers sont illégalement diffusés, le serveur teste pour chaque fichier le type de réseau sur lequel le fichier est diffusé (étape 29). S'il s'agit d'un réseau avec groupements, le serveur effectue le choix d'une politique de transparence et d'une politique de déploiement (étapes 31 et 32).

Une politique de transparence vise à éviter qu'une plate-forme 10 soit facilement repérée par les utilisateurs des réseaux P2P. Une telle politique consiste à ce qu'une session de déploiement mise en oeuvre par une plate-forme apparaisse sur le réseau comme un utilisateur ordinaire. Une telle politique définit donc notamment les identifiants des utilisateurs, et les plates-formes à utiliser. Les identifiants d'utilisateurs peuvent être générés aléatoirement et choisis de manière à faire croire aux utilisateurs qu'ils correspondent à de vrais utilisateurs. Ils peuvent ainsi être générés de manière à être humainement prononçables et avoir une longueur aléatoire. Ils peuvent également être choisis de manière ciblée, par exemple choisis parmi ceux utilisés par les pirates dès que ceux-ci se déconnectent du réseau P2P.

Les heures de connexion au réseau des utilisateurs ainsi simulés sont également choisies de manière à correspondre à de vrais utilisateurs. On définit ainsi des profils types d'utilisateurs simulés auxquels on associe un lieu géographique de connexion et un planning de connexion journalier ou hebdomadaire. En parallèle, on cherche à assurer une présence permanente sur les réseaux P2P surveillés en multipliant le nombre de sessions actives sur les plates-formes 10. Par ailleurs, la plupart des protocoles P2P sont capables de déterminer un identifiant de chaque terminal employé par les utilisateurs pour se connecter au réseau. De cette manière, si le terminal gère plusieurs sessions de connexion au réseau, il est possible de déterminer que ces sessions proviennent du même terminal. La politique de transparence vise également à changer à une fréquence aléatoire les identifiants des plates-formes, ainsi que les noms des répertoires de partage de fichiers. Les adresses IP utilisées par les plates-formes pour accéder au réseau 1 sont également changées aléatoirement.

Pour rendre plus efficace encore une politique de transparence, on peut prévoir de partager des fichiers non corrompus dont les auteurs auront donné leur accord pour leur mise en partage, ces fichiers pouvant toutefois être légèrement altérés pour en réduire la qualité de restitution.

Une politique de déploiement détermine notamment la manière de diffuser un fichier corrompu : sur quelles plates-formes, pour chaque plate-forme sur quels réseaux P2P, et sur chaque réseau avec combien de sessions.

A l'étape suivante 32, le serveur 2 émet un ordre de déploiement avec téléchargement et corruption de fichier à la volée, vers chacune des plates-formes 10 définies par les politiques de transparence et de déploiement choisies précédemment.

Si à l'étape 29, de nouveaux fichiers illégaux sont diffusés dans des réseaux sans groupement ou si à l'étape 23 aucun fichier illégal n'est détecté, le serveur d'administration 2 déclenche à l'étape 24 un clonage du nouveau fichier illégal ou du nouveau fichier original à protéger, pour en obtenir une copie corrompue, en envoyant un ordre de clonage au serveur de clonage 3, cet ordre contenant un identifiant du fichier et des caractéristiques de fichier (taille) que doit avoir le fichier corrompu. Le clonage de fichier consiste à créer une copie altérée du fichier original, dont les caractéristiques externes (nom, taille, ... et éventuellement signature) vues de l'utilisateur sont les mêmes que celles du fichier illégal ou original, mais dont le contenu a subi une altération le rendant inutilisable.

Comme pour les réseaux avec groupement, le serveur 2 choisit aux étapes suivantes 25, 26 une politique de transparence et une politique de déploiement pour chaque fichier illégal diffusé, puis à l'étape 27, il déclenche la diffusion des fichiers corrompus générés par le serveur de clonage 3.

Plus précisément, le module de gestion 11 de chaque plate-forme 10 est conçu pour traiter des ordres de création de sessions, des ordres de recherche, des ordres de déploiement et de téléchargement, des ordres de changement d'adresses IP (Internet Protocol) et de nom d'hôte pour changer une adresse IP ou le nom d'hôte, utilisés par la plate-forme pour se connecter au réseau 1, des ordres de réception de fichier à déployer, et des ordres de fourniture d'informations de fonctionnement de la plate-forme 10 pour permettre à un terminal d'administration distant de surveiller le fonctionnement de la plate-forme.

Pour pouvoir lancer des processus de recherche ou de déploiement, une plate-forme doit tout d'abord créer des sessions. Un tel traitement qui est exécuté par le module de gestion de sessions 13, est déclenché par le module de gestion 11, sur réception d'un fichier d'ordre 14 contenant des ordres création de sessions spécifiant pour chaque session à créer, des paramètres d'activation de session spécifiant notamment le protocole P2P à utiliser (c'est-à-dire le réseau P2P auquel la session doit être connectée, un masque d'adresses IP spécifiant le fournisseur d'accès à utiliser par la session pour se connecter au réseau 1, le nom de l'utilisateur sous lequel la session doit être créée, et la durée de la session.

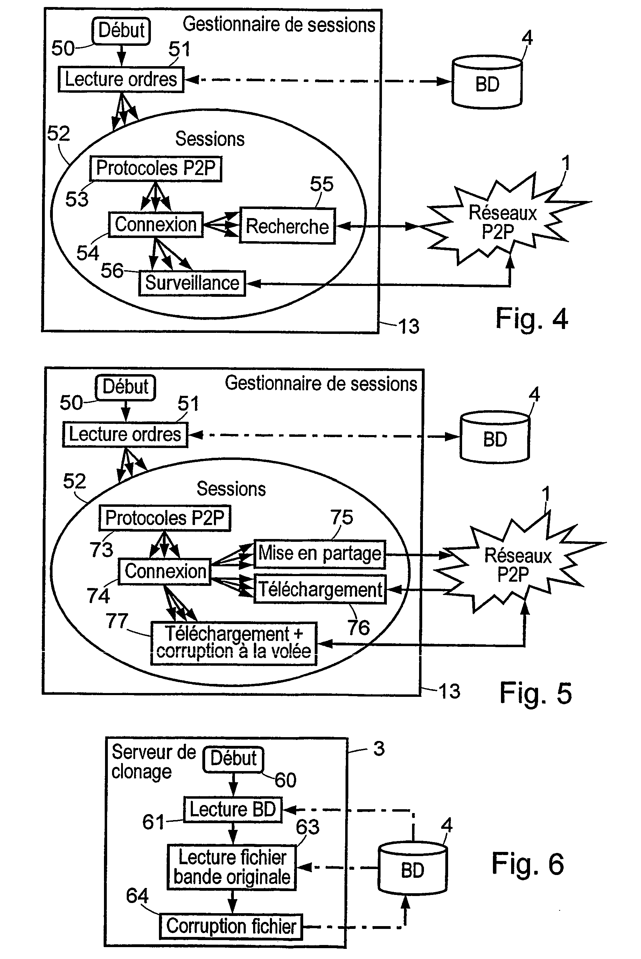

Sur la figure 4 ou 5, lorsque le module de gestion de sessions 13 est activé par le module de gestion 11, il exécute une procédure 50 comportant une première étape 51 de lecture du fichier d'ordres 14 et d'activation des sessions 52 spécifiées dans le fichier d'ordres, tenant compte des paramètres d'activation associés. A cet effet, le module de services 12 active le module de simulation 15 correspondant au protocole P2P à utiliser.

Une fois que l'ordre d'activation de sessions est exécuté, le module 11 transmet les informations d'activation de sessions à la base de données 4 pour informer le système des numéros de sessions disponibles sur la plate-forme 10. Les sessions qui sont ainsi activées peuvent ensuite être utilisées pour exécuter des ordres de recherche ou de déploiement.

La figure 4 représente en outre les tâches qui sont lancées par le module 13 à la suite de la réception d'un ordre de recherche. Un ordre de recherche contient notamment le nombre de sessions à affecter aux recherches sur la plate-forme, et pour chaque session utilisée :
- un identifiant de session,
- un indicateur spécifiant si la session doit surveiller ou non les serveurs du réseau P2P (qui mémorisent les caractéristiques des utilisateurs du réseau et des fichiers qu'ils mettent en partage) détectés non accessibles pour attendre qu'ils se connectent,
- éventuellement la durée de la session et la date de démarrage de la session,
- des mots clés devant se trouver dans les caractéristiques des fichiers recherchés, et
- éventuellement des filtres de recherche spécifiant notamment si la recherche doit être effectuée uniquement ou non dans les réseaux avec groupement, si la recherche doit porter uniquement ou non sur les utilisateurs connectés, et si la recherche doit être limitée ou non aux utilisateurs de certains pays.

A l'étape 51, le module 13 lit le fichier d'ordres de recherche 14, puis il lance pour chacune des sessions spécifiées, en faisant appel au module de services 12. une sous-tâche de connexion 54 de recherche pour exécuter l'ordre de recherche. Chaque sous-tâche de connexion 54 active une tâche élémentaire de recherche 55 pour chaque mot clé à rechercher et si l'ordre de recherche spécifie pour cette session que les serveurs non accessibles doivent être surveillés, elle active une tâche élémentaire de surveillance 56 pour chaque serveur non accessible détecté. Les tâches de surveillance déclenchent une tâche élémentaire de recherche 55 dès qu'un serveur surveillé devient accessible.

Chaque sous-tâche de connexion 54 présente une durée de vie prédéfinie pour respecter une politique de transparence. Si une recherche échoue partiellement ou totalement, elle est automatiquement relancée dès que les serveurs de réseau poste à poste sont à nouveau accessibles.

Les références, caractéristiques et informations de localisation des fichiers trouvés sont transmises au serveur de base de données 4 par le module de gestion 11 pour y être stockées. En particulier, ces informations regroupent des informations concernant le fichier trouvé à savoir notamment son nom, sa taille, son titre, sa signature et une description du fichier, et des informations concernant l'utilisateur qui diffuse le fichier, à savoir son identifiant, son adresse IP et d'autres informations telles que la date et l'heure à laquelle le fichier a été trouvé.

La figure 5 représente des sessions qui sont utilisées pour exécuter des ordres de déploiement. Un ordre de déploiement contient notamment le type de déploiement à effectuer, les identifiants des sessions à utiliser pour effectuer le déploiement, et pour chaque session spécifiée, un identifiant des fichiers à déployer et la bande passante ou la vitesse de téléchargement attribuée au déploiement. Le type de déploiement peut être une mise en partage de fichiers, un téléchargement de fichiers pour corruption à la volée dans le cas de réseaux avec groupements, et un téléchargement de fichier pour saturer les files d'attente des utilisateurs qui mettent en partage des fichiers illégaux. En effet, le principal inconvénient des réseaux P2P pour les utilisateurs provient de la limitation de la bande passante disponible pour les téléchargements. Pour minimiser cet inconvénient, les réseaux P2P mettent en place des mécanismes de files d'attente dans lesquelles les requêtes de téléchargement des utilisateurs sont mises en attente de traitement. Les tâches de téléchargement qui sont activées visent à saturer les files d'attentes de requêtes de téléchargement, afin de réduire le nombre d'utilisateurs pouvant télécharger les fichiers illégaux.

La vitesse de téléchargement est choisie avantageusement très basse dans le cas d'un téléchargement pour saturation et très élevée dans le cas d'un téléchargement pour corruption à la volée et pour la mise en partage d'un fichier corrompu. De cette manière, les fichiers illégaux sont rendus peu accessibles; et les utilisateurs sont incités à télécharger les fichiers corrompus, ce qui permet de maximiser le nombre de téléchargements simultanés par les utilisateurs de fichiers corrompus se trouvant dans les plates-formes 10. A la suite du démarrage du téléchargement par un utilisateur d'un fichier corrompu mis en partage, cette vitesse est avantageusement ralentie au maximum pour retarder le moment où l'utilisateur s'apercevra que le fichier qu'il a téléchargé est inutilisable.

A la première étape 51 du processus 50, le module 13 lit le fichier d'ordre 14, les fichiers corrompus à mettre en partage dans un réseau P2P 1 ayant été préalablement transmis à la plate-forme 10. Puis il lance les tâches de déploiement pour les sessions spécifiées dans le fichier d'ordre en faisant appel aux services 12.
Chaque session 52 utilisée pour le déploiement active une sous-tâche de connexion 54 pour exécuter l'ordre de déploiement. Chaque sous-tâche de connexion 54 active une tâche élémentaire de mise en partage 75 si l'ordre de déploiement contient un type de déploiement "mise en partage", et/ou une tâche élémentaire de téléchargement 76 si l'ordre de déploiement contient un type de déploiement "téléchargement", et/ou une tâche élémentaire 77 de téléchargement et corruption à la volée si l'ordre de déploiement contient un tel type de déploiement.

Le téléchargement avec corruption à la volée est effectué en détournant le flux binaire établit entre un utilisateur et la plate-forme. Cette action est possible en utilisant le pointeur mémoire du fichier qui est géré par le système d'exploitation. De cette manière, il est possible de remplacer un octet par un autre en toute transparence, afin que les utilisateurs qui téléchargent le morceau de fichier reçoivent une version corrompue de celle-ci. Le remplacement de certains octets par d'autres est effectué de manière à ne pas changer la signature du fichier.
Ainsi, un utilisateur qui télécharge le morceau de fichier altéré d'une des plates-formes 10 disposera finalement d'un fichier dont une partie est corrompue, rendant le fichier inutilisable.

A la fin du téléchargement, le fichier est immédiatement effacé de la mémoire, puis à nouveau téléchargé pendant toute la durée de la session de téléchargement avec corruption à la volée.

Le téléchargement pour saturation des files d'attente est effectué vers un autre répertoire que ceux mis en partage, pour éviter que les utilisateurs du réseau P2P aient accès au fichier illégal sur la plate-forme.

Toutes les informations relatives au déploiement (pays, identifiant plate-forme, identifiants d'utilisateurs simulés, date, type d'utilisateur, type de réseau, politique de transparence, bande passante attribuée, ...) sont transmises à la base de données 4 pour y être stockées.

Le déploiement peut également être effectué de manière manuelle à l'aide de plates-formes manuelles 10', dans certains réseaux P2P qui ne sont pas accessibles d'une manière automatisée, du fait notamment que le source du logiciel de réseau P2P n'est pas librement accessible.

La figure 6 représente un processus de clonage 60 qui est exécuté par le serveur de clonage 3. A la première étape 61 de ce processus, le serveur de clonage 3 accède à la base de données 4 pour obtenir les références et caractéristiques des fichiers à dupliquer et corrompre. A l'étape suivante 62, le serveur 3 accède à la base de données 4 pour obtenir les fichiers contenant la bande originale des fichiers à dupliquer. A l'étape suivante 63, le serveur 3 génère un fichier corrompu pour chaque fichier à dupliquer à partir du fichier contenant la bande originale et des caractéristiques du fichier corrompu à obtenir. Le contenu et toutes les informations relatives aux fichiers corrompus ainsi générés sont mémorisés dans la base de données 4

Le traitement de clonage peut consister à répéter une séquence binaire au début du fichier sur toute la longueur du fichier, ou encore à remplacer une partie des octets du fichier par d'autres, par exemple les octets 00 sont remplacés par les octets 79. Ce traitement peut également comprendre un traitement de modification aléatoire de la signature du fichier pour éviter que les fichiers corrompus puissent être repérés par leur signature.

La figure 7 montre plus en détail un module 15 de simulation d'un utilisateur d'un réseau P2P. Ce module comprend un noyau logiciel 101 auquel ont accès un module dé connexion 102, un module de partage 103, un module de configuration 104, un module de recherche 105 et un module de téléchargement 106. Ces modules sont spécifiquement conçus pour un protocole de réseau P2P 1 donné et adaptés aux spécificités de ce réseau. Chacun des modules 15 comprend une interface identique pour pouvoir être appelé d'une même manière par les services 12.

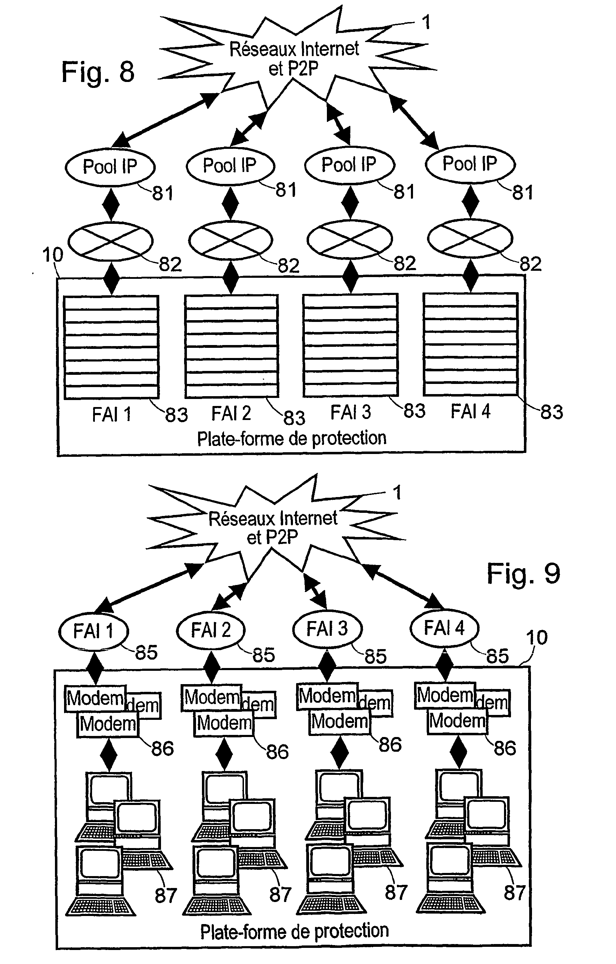

La figure 8 représente l'architecture matérielle d'une plate-forme de protection 10 automatique. Sur cette figure, la plate-forme 10 comprend plusieurs groupes de serveurs 83, chaque groupe de serveurs étant connecté au réseau 1 par l'intermédiaire d'un réseau IP 82 de fournisseur d'accès respectif, chaque fournisseur d'accès attribuant au groupe de serveurs 83 un ensemble d'adresses IP 81 attribuables à chaque session simulant un utilisateur d'un réseau P2P.
Cette architecture permet de changer aléatoirement de fournisseur d'accès dans le cadre d'une politique de transparence.

La figure 9 représente l'architecture matérielle d'une plate-forme de protection 10 manuelle. Sur cette figure, la plate-forme 10 comprend un ensemble de postes 87 de protection manuelle, chaque poste étant connecté par l'intermédiaire d'un modem 86 respectif au réseau 1 par l'intermédiaire d'un fournisseur d'accès 85, la plate-forme utilisant plusieurs fournisseurs d'accès attribuant à chaque connexion au réseau 1 une adresse IP qui est modifiée à chaque connexion.

Grâce à la mise en oeuvre d'une base de données rassemblant toutes les informations de fonctionnement recueillies des plates-formes de protection, il est possible de réaliser des analyses statistiques fiables et approfondies, pour déterminer notamment des données qualitatives et quantitatives (datamining) sur les oeuvres téléchargées, et des ratios de téléchargement des fichiers corrompus mis en partage, en vue d'améliorer les politiques de transparence qui sont affectées aux sessions.

## Revendications

1. Procédé de protection de fichiers diffusés illégalement dans des réseaux poste à poste mis en oeuvre, conformément à des protocoles de réseau poste à poste respectifs, par des terminaux d'utilisateur (9) connectés à un réseau (1) de transmission de données et qui sont configurés pour fonctionner à la fois comme client et/ou comme serveur de fichiers, le procédé comprenant des étapes consistant à :
- générer des versions corrompues de fichiers à protéger ayant des caractéristiques identiques à celles des fichiers à protéger, et
- mettre en partage les versions corrompues dans un réseau poste à poste, conformément à un protocole de réseau poste à poste,
**caractérisé en ce qu'**il comprend des étapes consistant à :
- recevoir par des plates-formes de protection (10) connectées en différents points du réseau de transmission de données (1), des ordres d'activation de terminaux d'utilisateurs simulés (52) de réseau poste à poste, chaque ordre d'activation de terminal d'utilisateur simulé spécifiant un protocole de réseau poste à poste à utiliser, un identifiant d'utilisateur à utiliser pour accéder au réseau poste à poste, et un fournisseur d'accès (82, 85) à utiliser pour connecter le terminal d'utilisateur au réseau de transmission de données, et
- dans chaque plate-forme de protection, traiter chaque ordre d'activation en activant sur le réseau poste à poste spécifié par l'ordre d'activation un terminal d'utilisateur simulé ayant l'identifiant d'utilisateur spécifié dans l'ordre d'activation, et en connectant le terminal d'utilisateur activé au réseau de transmission de données en utilisant le fournisseur d'accès spécifié par l'ordre d'activation, et en mettant en partage des versions corrompues générées.

2. Procédé selon la revendication 1,
**caractérisé en ce qu'**il comprend en outre des étapes consistant à :
- rechercher par au moins un terminal d'utilisateur (52) simulé par une plate-forme de protection (10), des fichiers mis en partage par des terminaux d'utilisateurs (9) dans des réseaux poste à poste et reproduisant au moins partiellement le contenu de fichiers à protéger,
- si un fichier mis en partage est trouvé, obtenir des caractéristiques du fichier trouvé, ainsi que des informations permettant d'identifier l'utilisateur mettant en partage le fichier,
- générer une version corrompue du fichier trouvé, ayant les caractéristiques du fichier trouvé, et mettre en partage la version corrompue par les terminaux d'utilisateur simulés.

3. Procédé selon la revendication 2,
**caractérisé en ce que** si des groupements sont définis dans le réseau poste à poste où le fichier mis en partage est trouvé, le fichier est téléchargé par un terminal d'utilisateur simulé (52), altéré et mis en partage au fur et à mesure de son téléchargement.

4. Procédé selon la revendication 2 ou 3,
**caractérisé en ce que** durant la recherche de fichiers mis en partage par des terminaux d'utilisateurs (9) dans des réseaux poste à poste, un serveur de réseau poste à poste détecté non accessible est mis sous surveillance par le terminal d'utilisateur simulé (52) et dès qu'il est à nouveau détecté accessible, la recherche de fichiers mis en partage est lancée sur le serveur de réseau poste à poste accessible, de manière à rendre la recherche plus exhaustive.

5. Procédé selon l'une des revendications 2 à 4,
**caractérisé en ce qu'**il comprend en outre une étape de téléchargement par un terminal d'utilisateur simulé (52) d'un fichier mis en partage trouvé dans un terminal d'utilisateur (9), afin de limiter l'accès au fichier mis en partage par d'autres terminaux d'utilisateurs (9).

6. Procédé selon la revendication 5,
**caractérisé en ce que** le téléchargement par un terminal d'utilisateur simulé (52) d'un fichier mis en partage trouvé est effectué à une vitesse faible, une vitesse élevée étant attribuée au téléchargement par un terminal d'utilisateur (9) d'un fichier corrompu mis en partage par un terminal utilisateur (52) simulé par une plate-forme de protection (10).

7. Procédé selon l'une des revendications 1 à 6,
**caractérisé en ce que** les terminaux utilisateurs simulés (52) sont simulés conformément à un profil d'utilisateur définissant un lieu géographique de connexion au réseau de transmission de données (1) et un planning de connexion journalier ou hebdomadaire.

8. Procédé selon la revendication 7,
**caractérisé en ce que** les terminaux utilisateurs simulés (52) sont simulés à l'aide d'un nom d'utilisateur généré aléatoirement ou choisi de manière ciblée.

9. Procédé selon l'une des revendications 1 à 8,
**caractérisé en ce qu'**une adresse IP du réseau de transmission de données (1) est attribuée à chaque terminal d'utilisateur simulé (52), cette adresse étant changée périodiquement.

10. Système de protection de fichiers diffusés illégalement dans des réseaux poste à poste mis en oeuvre, conformément à des protocoles de réseau poste à poste respectifs, par des terminaux d'utilisateur (9) connectés à un réseau (1) de transmission de données et qui sont configurés pour fonctionner à la fois comme client et/ou comme serveur de fichiers, le système comprenant des moyens pour générer des versions corrompues de fichiers à protéger ayant des caractéristiques identiques à celles des fichiers à protéger, et pour mettre en partage les versions corrompues dans un réseau poste à poste, conformément à un protocole de réseau poste à poste,
**caractérisé en ce qu'**il comprend une pluralité de plates-formes de protection (10) connectées en différents points du réseau de transmission de données (1), chacune des plates-formes comprenant :
- des moyens (12, 15) pour simuler des terminaux d'utilisateur (52) de différents réseaux poste à poste,
- des moyens pour recevoir par l'intermédiaire du réseau de transmission de données (1) des ordres d'activation de terminaux d'utilisateur simulés (52), chaque ordre d'activation spécifiant un protocole de réseau poste à poste à utiliser, un identifiant d'utilisateur à utiliser pour accéder au réseau poste à poste, et un fournisseur d'accès (82, 85) à utiliser pour se connecter au réseau poste à poste,
- des moyens pour traiter chaque ordre d'activation en activant sur le réseau poste à poste spécifié par l'ordre d'activation un terminal d'utilisateur simulé ayant l'identifiant d'utilisateur spécifié dans l'ordre d'activation, et en connectant le terminal d'utilisateur activé au réseau de transmission de données en utilisant le fournisseur d'accès spécifié par l'ordre d'activation, et
- des moyens pour mettre en partage dans plusieurs réseaux poste à poste des versions corrompues de fichiers à protéger par l'intermédiaire des terminaux d'utilisateur simulés.

11. Système selon la revendication 10,
**caractérisé en ce que** chaque plate-forme de protection (10) comprend des moyens pour effectuer des recherches, par l'intermédiaire de terminaux d'utilisateurs simulés (52), de fichiers mis en partage dans les réseaux poste à poste et reproduisant au moins partiellement le contenu de fichiers à protéger.

12. Système selon la revendication 10 ou 11,
**caractérisé en ce que** chaque plate-forme de protection (10) comprend des moyens pour télécharger par l'intermédiaire de terminaux d'utilisateurs simulés (52), un morceau de fichier mis en partage par un groupement de terminaux dans un réseau poste à poste et reproduisant au moins partiellement le contenu de fichiers à protéger, des moyens pour altérer le morceau de fichier télécharger et pour mettre en partage le morceau de fichier altéré, l'altération du morceau de fichier étant effectuée de manière à ce qu'une signature du fichier ne soit pas modifiée.

13. Système selon l'une des revendications 10 à 12,
caractérisé en ce chaque plate-forme de protection (10) comprend des moyens pour télécharger par l'intermédiaire d'un terminal d'utilisateur simulé (52) un fichier mis en partage trouvé dans un terminal d'utilisateur (9) et reproduisant au moins partiellement le contenu de fichiers à protéger, afin de limiter l'accès au fichier mis en partage par d'autres terminaux d'utilisateurs (9).

14. Système selon l'une des revendications 10 à 13,
**caractérisé en ce que** chaque plate-forme de protection (10) comprend des moyens pour télécharger à faible vitesse par l'intermédiaire d'un terminal d'utilisateur simulé (52), un fichier mis en partage trouvé, et des moyens pour télécharger à vitesse élevée vers un terminal d'utilisateur (9) de réseau poste à poste, un fichier corrompu mis en partage par l'intermédiaire d'un terminal utilisateur simulé.

15. Système selon l'une des revendications 10 à 14,
**caractérisé en ce qu'**il comprend une base de données centrale (4) accessible par l'intermédiaire du réseau de transmission de données (1) aux plates-formes de protection (10) et dans laquelle sont stockées :
- des informations relatives aux terminaux d'utilisateurs (52) simulés par les plates-formes de protection,
- des informations relatives à des fichiers mis en partage par des terminaux d'utilisateurs (9) de réseaux poste à poste et reproduisant au moins partiellement le contenu de fichiers à protéger, et
- des informations relatives aux fichiers à protéger et aux fichiers mis en partage par les plates-formes.

16. Système selon l'une des revendications 10 à 15,
**caractérisé en ce qu'**il comprend un serveur de clonage (3) connecté au réseau (1) et conçu pour générer des versions corrompues des fichiers à protéger.

17. Système selon l'une des revendications 10 à 16,
**caractérisé en ce que** chaque plate-forme de protection comprend des groupes de serveurs (83) connectés au réseau de transmission de données (1) par l'intermédiaire de plusieurs fournisseurs d'accès (82, 85).

18. Système selon l'une des revendications 10 à 17,
**caractérisé en ce que** chaque plate-forme de protection (10) comprend un module d'interface (15) d'accès à chacun des réseaux poste à poste dans lesquels les fichiers à protéger doivent être protégés.

## Claims

1. A method for protecting files illegally distributed in peer-to-peer networks implemented, in accordance with respective peer-to-peer network protocols, by user terminals (9) connected to a data transmission network (1) and configured to function both as client and/or file server, such method comprising steps of:
- generating corrupt versions of files to be protected having features identical to those of the files to be protected, and
- sharing the corrupt versions in a peer-to-peer network, in accordance with a peer-to-peer network protocol,
**characterized in that** it comprises steps of:
- receiving through protection platforms (10) connected at different points in the data transmission network (1), orders for activating simulated user terminals (52) of a peer-to-peer network, each simulated user terminal activation order specifying a peer-to-peer network protocol to be used, a user identifier to be used to access the peer-to-peer network, and an access provider (82, 85) to be used to connect the user terminal to the data transmission network, and
- in each protection platform, processing each activation order by activating on the peer-to-peer network specified by the activation order a simulated user terminal having the user identifier specified in the activation order, and by connecting the activated user terminal to the data transmission network using the access provider specified by the activation order, and by sharing generated corrupt versions.

2. A method according to claim 1,
**characterized in that** it further comprises steps of:
- searching, by at least one user terminal (52) simulated by a protection platform (10), for files shared by user terminals (9) in peer-to-peer networks and at least partially reproducing the content of files to be protected,
- if a file shared is found, obtaining features of the file found as well as information enabling the user sharing the file to be identified,
- generating a corrupt version of the file found, having the features of the file found, and sharing the corrupt version through the simulated user terminals.

3. A method according to claim 2,
**characterized in that** if groups are defined in the peer-to-peer network where the shared file is found, the file is downloaded by a simulated user terminal (52), altered and shared as it is downloaded.

4. A method according to claim 2 or 3,
**characterized in that** during the search for files shared by user terminals (9) in peer-to-peer networks, a peer-to-peer network server detected as non-accessible is monitored by the simulated user terminal (52) and as soon as it is detected as accessible again, the search for shared files is launched on the accessible peer-to-peer network server, so as to make the search more complete.

5. A method according to one of claims 2 to 4,
**characterized in that** it further comprises a step of downloading by a simulated user terminal (52) a shared file found in a user terminal (9), so as to limit access to the shared file by other user terminals (9).

6. A method according to claim 5,
**characterized in that** the downloading by a simulated user terminal (52) of a shared file found is performed at a low speed, a high speed being allocated to the downloading by a user terminal (9) of a corrupt file shared by a user terminal (52) simulated by a protection platform (10).

7. A method according to one of claims 1 to 6,
**characterized in that** the simulated user terminals (52) are simulated in accordance with a user profile defining a geographic location for connecting to the data transmission network (1) and a daily or weekly connection schedule.

8. A method according to claim 7,
**characterized in that** the simulated user terminals (52) are simulated using a user name generated randomly or chosen in a targeted manner.

9. A method according to one of claims 1 to 8,
**characterized in that** an IP address of the data transmission network (1) is allocated to each simulated user terminal (52), this address being periodically changed.

10. A system for protecting files illegally distributed in peer-to-peer networks implemented, in accordance with respective peer-to-peer network protocols, by user terminals (9) connected to a data transmission network (1) and configured to function both as client and/or file server, the system comprising means for generating corrupt versions of files to be protected having features identical to those of the files to be protected, and for sharing the corrupt versions in a peer-to-peer network, in accordance with a peer-to-peer network protocol,
**characterized in that** it comprises a plurality of protection platforms (10) connected at different points in the data transmission network (1), each of the platforms comprising:
- means (12, 15) for simulating user terminals (52) of different peer-to-peer networks,
- means for receiving through the data transmission network (1) simulated user terminal activation orders (52), each activation order specifying a peer-to-peer network protocol to be used, a user identifier to be used to access the peer-to-peer network, and an access provider (82, 85) to be used to connect to the peer-to-peer network,
- means for processing each activation order by activating on the peer-to-peer network specified by the activation order a simulated user terminal having the user identifier specified in the activation order, and by connecting the activated user terminal to the data transmission network using the access provider specified by the activation order, and
- means for sharing corrupt versions of files to be protected in several peer-to-peer networks through simulated user terminals.

11. A system according to claim 10,
**characterized in that** each protection platform (10) comprises means for performing searches, through simulated user terminals (52), for files shared in the peer-to-peer networks and at least partially reproducing the content of files to be protected.

12. A system according to claim 10 or 11,
**characterized in that** each protection platform (10) comprises means for downloading through simulated user terminals (52), a piece of file shared by a group of terminals in a peer-to-peer network and at least partially reproducing the content of files to be protected, means for altering the piece of file downloaded and for sharing the altered piece of file, the piece of file being altered so that a signature of the file is not changed.

13. A system according to one of claims 10 to 12,
**characterized in that** each protection platform (10) comprises means for downloading, through a simulated user terminal (52), a shared file found in a user terminal (9) and at least partially reproducing the content of files to be protected, so as to limit access to the shared file by other user terminals (9).

14. A system according to one of claims 10 to 13,
**characterized in that** each protection platform (10) comprises means for downloading at low speed through a simulated user terminal (52), a shared file found, and means for downloading at high speed to a peer-to-peer network user terminal (9), a corrupt file shared through a simulated user terminal.

15. A system according to one of claims 10 to 14,
**characterized in that** it comprises a central database (4) accessible through the data transmission network (1) to the protection platforms (10) and in which the following are stored:
- information concerning the user terminals (52) simulated by the protection platforms,
- information concerning files shared by user terminals (9) of peer-to-peer networks and at least partially reproducing the content of files to be protected, and
- information concerning the files to be protected and the files shared by the platforms.

16. A system according to one of claims 10 to 15,
**characterized in that** it comprises a cloning server (3) connected to the network (1) and designed to generate corrupt versions of the files to be protected.

17. A system according to one of claims 10 to 16,
**characterized in that** each protection platform comprises groups of servers (83) connected to the data transmission network (1) through several access providers (82, 85).

18. A system according to one of claims 10 to 17,
**characterized in that** each protection platform (10) comprises an interface module (15) for accessing each peer-to-peer network in which the files to be protected must be protected.

## Patentansprüche

1. Verfahren zum Schutz von illegal in Peer-to-Peer-Netzwerken verbreiteten Dateien, wobei die Peer-to-Peer-Netzwerke gemäß jeweiligen Peer-to-Peer-Netzwerkprotokollen durch Benutzerendgeräte (9) implementiert werden, die an einem Datenübertragungsnetz (1) angeschlossen sind und die konfiguriert sind, um zugleich als Nutzer und/oder als Dateiserver zu funktionieren, das Verfahren umfassend Schritte, die darin bestehen:
- beschädigte Versionen von zu schützenden Dateien zu generieren, die ähnliche Eigenschaften aufweisen, wie diejenigen der zu schützenden Dateien, und
- die beschädigten Versionen gemäß einem Peer-to-Peer-Netzwerkprotokoll in einem Peer-to-Peer-Netzwerk zur gemeinsamen Nutzung bereitzustellen,
**dadurch gekennzeichnet, dass** es Schritte umfasst, die darin bestehen:
- über an verschiedenen Stellen des Datenübertragungsnetzes (1) angeschlossene Schutzplattformen (10) Befehle zur Aktivierung von simulierten Benutzerendgeräten (52) eines Peer-to-Peer-Netzwerks zu empfangen, wobei jeder Befehl zur Aktivierung eines simulierten Benutzerendgeräts ein zu verwendendes Peer-to-Peer-Netzwerkprotokoll, eine beim Zugang zum Peer-to-Peer-Netzwerk zu verwendende Benutzerkennung, und einen zum Anschluss des Benutzerendgeräts an das Datenübertragungsnetz zu verwendenden Zugangsprovider (82, 85) spezifiziert, und
- in jeder Schutzplattform jeden Aktivierungsbefehl zu behandeln, indem ein die im Aktivierungsbefehl spezifizierte Benutzerkennung aufweisendes simuliertes Benutzerendgerät auf dem durch den Aktivierungsbefehl spezifizierten Peer-to-Peer-Netzwerk aktiviert wird, und indem das aktivierte Benutzerendgerät anhand des durch den Aktivierungsbefehl spezifizierten Zugangsproviders an das Datenübertragungsnetz angeschlossen wird, und indem generierte beschädigte Versionen zur gemeinsamen Nutzung bereitgestellt werden.

2. Verfahren nach Anspruch 1,
**dadurch gekennzeichnet, dass** es außerdem Schritte umfasst, die darin bestehen:
- durch wenigstens ein durch eine Schutzplattform (10) simuliertes Benutzerendgerät (52) Dateien zu suchen, die durch Benutzerendgeräte (9) in Peer-to-Peer-Netzwerken zur gemeinsamen Nutzung bereitgestellt werden und die den Inhalt von zu schützenden Dateien wenigstens teilweise wiedergeben,
- wenn eine zur gemeinsamen Nutzung bereitgestellte Datei gefunden wird, Eigenschaften der gefundenen Datei, sowie Informationen zum Identifizieren des die Datei zur gemeinsamen Nutzung bereitstellenden Benutzers zu erhalten,
- eine beschädigte Version der gefundenen Datei zu generieren, die die Eigenschaften der gefundenen Datei aufweist, und die beschädigte Version durch die simulierten Benutzerendgeräte zur gemeinsamen Nutzung bereitzustellen.

3. Verfahren nach Anspruch 2,
**dadurch gekennzeichnet, dass**, wenn in dem Peer-to-Peer-Netzwerk, in dem die zur gemeinsamen Nutzung bereitgestellte Datei gefunden wird, Anordnungen definiert sind, die Datei durch ein simuliertes Benutzerendgerät (52) ferngeladen, verändert und je nach ihrem Fernladen zur gemeinsamen Nutzung bereitgestellt wird.

4. Verfahren nach Anspruch 2 oder 3,
**dadurch gekennzeichnet, dass** während der Suche von durch Benutzerendgeräte (9) in Peer-to-Peer-Netzwerken zur gemeinsamen Nutzung bereitgestellten Dateien, ein als nicht zugänglich festgestellter Peer-to-Peer-Netzwerk-Server durch das simulierte Benutzerendgerät (52) unter Überwachung gestellt wird und sobald er wieder zugänglich festgestellt wird, die Suche von zur gemeinsamen Nutzung bereitgestellten Dateien auf dem zugänglichen Peer-to-Peer-Netzwerk-Server gestartet wird, um die Suche erschöpfender zu machen.

5. Verfahren nach einem der Ansprüche 2 bis 4,
**dadurch gekennzeichnet, dass** es weiterhin einen Schritt des Fernladens einer zur gemeinsamen Nutzung bereitgestellten gefundenen Datei in ein Benutzerendgerät (9) durch ein simuliertes Benutzerendgerät (52) umfasst, um den Zugang zu der zur gemeinsamen Nutzung bereitgestellten Datei durch andere Benutzerendgeräte (9) zu beschränken.

6. Verfahren nach Anspruch 5,
**dadurch gekennzeichnet**, das Fernladen einer zur gemeinsamen Nutzung bereitgestellten gefundenen Datei durch ein simuliertes Benutzerendgerät (52) bei einer niedrigen Geschwindigkeit ausgeführt wird, wobei dem Fernladen durch ein Benutzerendgerät (9) einer beschädigten Datei, die durch ein durch eine Schutzplattform (10) simuliertes Benutzerendgerät (52) zur gemeinsamen Nutzung bereitgestellt wird, eine hohe Geschwindigkeit zugewiesen wird.

7. Verfahren nach einem der Ansprüche 1 bis 6,
**dadurch gekennzeichnet, dass** die simulierten Benutzerendgeräte (52) gemäß einem Benutzerprofil, das einen geographischen Standort des Anschlusses an das Datenübertragungsnetz (1) und eine Tages- oder Wochenanschlussplanung definiert, simuliert werden.

8. Verfahren nach Anspruch 7,
**dadurch gekennzeichnet, dass** die simulierten Benutzerendgeräte (52) anhand eines zufällig generierten oder gezielt gewählten Benutzernamens simuliert werden.

9. Verfahren nach einem der Ansprüche 1 bis 8,
**dadurch gekennzeichnet, dass** jedem simulierten Benutzerendgerät (52) eine IP-Adresse des Datenübertragungsnetzes (1) zugewiesen wird, wobei diese Adresse periodisch geändert wird.

10. System zum Schutz von illegal in Peer-to-Peer-Netzwerken verbreiteten Dateien, wobei die Peer-to-Peer-Netzwerke gemäß jeweiligen Peer-to-Peer-Netzwerkprotokollen durch Benutzerendgeräte (9) implementiert werden, die an einem Datenübertragungsnetz (1) angeschlossen sind und die konfiguriert sind, um zugleich als Nutzer und/oder als Dateiserver zu funktionieren, das System umfassend Mittel zum Generieren von beschädigten Versionen von zu schützenden Dateien, die ähnliche Eigenschaften aufweisen, wie diejenigen der zu schützenden Dateien, und Mittel zur Bereitstellung zur gemeinsamen Nutzung der beschädigten Versionen in einem Peer-to-Peer-Netzwerk gemäß einem Peer-to-Peer-Netzwerkprotokoll,
**dadurch gekennzeichnet, dass** es eine Vielzahl von an verschiedenen Stellen des Datenübertragungsnetzes (1) angeschlossenen Schutzplattformen (10) umfasst, wobei jede Plattform Folgendes umfasst:
- Mittel (12, 15) zum Simulieren von Benutzerendgeräten (52) verschiedener Peer-to-Peer-Netzwerke,
- Mittel zum Empfangen von Befehlen zur Aktivierung von simulierten Benutzerendgeräten (52) über das Datenübertragungsnetz (1), wobei jeder Aktivierungsbefehl ein zu verwendendes Peer-to-Peer-Netzwerkprotokoll, eine beim Zugang zum Peer-to-Peer-Netzwerk zu verwendende Benutzerkennung, und einen zum Anschluss an das Peer-to-Peer-Netzwerk zu verwendenden Zugangsprovider (82, 85) spezifiziert,
- Mittel zur Behandlung jedes Aktivierungsbefehls, indem auf dem durch den Aktivierungsbefehl spezifizierten Peer-to-Peer-Netzwerk ein die in dem Aktivierungsbefehl spezifizierte Benutzerkennung aufweisendes simuliertes Benutzerendgerät aktiviert wird, und indem das aktivierte Benutzerendgerät anhand des durch den Aktivierungsbefehl spezifizierten Zugangsproviders an das Datenübertragungsnetz angeschlossen wird, und
- Mittel zur Bereitstellung zur gemeinsamen Nutzung von beschädigten Versionen von zu schützenden Dateien in mehreren Peer-to-Peer-Netzwerken über die simulierten Benutzerendgeräte.

11. System nach Anspruch 10,
**dadurch gekennzeichnet, dass** jede Schutzplattform (10) Mittel umfasst, um in den Peer-to-Peer-Netzwerken zur gemeinsamen Nutzung bereitgestellten Dateien über simulierte Benutzerendgeräte (52) zu suchen, wobei die Dateien den Inhalt von zu schützenden Dateien wenigstens teilweise wiedergeben.

12. System nach Anspruch 10 oder 11,
**dadurch gekennzeichnet, dass** jede Schutzplattform (10) Mittel umfasst, um einen durch eine Anordnung von Endgeräten in einem Peer-to-Peer-Netzwerk zur gemeinsamen Nutzung bereitgestellten Dateiabschnitt über simulierte Benutzerendgeräte (52) fernzuladen, wobei der Dateiabschnitt den Inhalt von zu schützenden Dateien wenigstens teilweise wiedergibt, Mittel um den ferngeladenen Dateiabschnitt zu verändern und den veränderten Dateiabschnitt zur gemeinsamen Nutzung bereitzustellen, wobei die Veränderung des Dateiabschnitts so erfolgt, dass eine Signatur der Datei nicht geändert wird.

13. System nach einem der Ansprüche 10 bis 12,
**dadurch gekennzeichnet, dass** jede Schutzplattform (10) Mittel umfasst, um eine zur gemeinsamen Nutzung bereitgestellte gefundene Datei über ein simuliertes Benutzerendgerät (52) in ein Benutzerendgerät (9) fernzuladen, wobei die Datei den Inhalt von zu schützenden Dateien wenigstens teilweise wiedergibt, um den Zugang zu der zur gemeinsamen Nutzung bereitgestellten Datei durch andere Benutzerendgeräte (9) zu beschränken.

14. System nach einem der Ansprüche 10 bis 13,
**dadurch gekennzeichnet, dass** jede Schutzplattform (10) Mittel umfasst, um eine zur gemeinsamen Nutzung bereitgestellte gefundene Datei über ein simuliertes Benutzerendgerät (52) bei niedriger Geschwindigkeit fernzuladen, und Mittel, um eine beschädigte zur gemeinsamen Nutzung bereitgestellte Datei über ein simuliertes Benutzerendgerät zu einem Benutzerendgerät (9) eines Peer-to-Peer-Netzwerks bei hoher Geschwindigkeit fernzuladen.

15. System nach einem der Ansprüche 10 bis 14,
**dadurch gekennzeichnet, dass** es eine über das Datenübertragungsnetz (1) zu den Schutzplattformen (10) zugängliche zentrale Datenbank (4) umfasst, in der folgende Informationen gespeichert werden:
- Informationen bezüglich der durch die Schutzplattformen simulierten Benutzerendgeräte (52),
- Informationen bezüglich Dateien, die durch Benutzerendgeräte (9) von Peer-to-Peer-Netzwerken zur gemeinsamen Nutzung bereitgestellt werden und die den Inhalt von zu schützenden Dateien wenigstens teilweise wiedergeben, und
- Informationen bezüglich der zu schützenden Dateien und der durch die Plattformen zur gemeinsamen Nutzung bereitgestellten Dateien.

16. System nach einem der Ansprüche 10 bis 15,
**dadurch gekennzeichnet, dass** es einen an das Netz (1) angeschlossenen Klonierungsserver (3) umfasst, der so eingerichtet ist, beschädigte Versionen der zu schützenden Dateien zu generieren.

17. System nach einem der Ansprüche 10 bis 16,
**dadurch gekennzeichnet, dass** jede Schutzplattform Gruppen von Servern (83) umfasst, die über mehrere Zugangsprovider (82, 85) an das Datenübertragungsnetz (1) angeschlossen sind.

18. System nach einem der Ansprüche 10 bis 17,
**dadurch gekennzeichnet, dass** jede Schutzplattform (10) ein Schnittstellenmodul (15) umfasst, das Zugang zu jedem Peer-to-Peer-Netzwerk, in dem die zu schützenden Dateien zu schützen sind, ermöglicht.
